# EUROPÄISCHE PATENTANMELDUNG

(11) **EP 4 410 457 A1**
(43) Veröffentlichungstag der Anmeldung: **07.08.2024**
(21) Anmeldenummer: 24155003.7
(22) Anmeldetag: 31.01.2024
(51) Int. Cl.: B23B 31/16, B23B 5/28, B23B 31/40

(54) **WERKZEUGMASCHINE UND HALTEVORRICHTUNG ZUR FELGENBEARBEITUNG**

(30) Priorität: 01.02.2023 DE 102023102505
(71) Anmelder: CHIRON Group SE, 78532 Tuttlingen (DE)
(72) Erfinder: Deufel, Karl, 78600 Kolbingen (DE); Eppler, Claus, 72469 Meßstetten (DE)
(74) Vertreter: Witte, Weller & Partner Patentanwälte mbB

(57) **Zusammenfassung**

Eine Haltevorrichtung (100) für eine eine Mittenachse (82) aufweisende Felge (70) umfasst ein Spannfutter (104) mit verfahrbaren Klemmbacken (108, 110) zur Aufnahme eines Felgenhorns (80) der Felge (70) und eine Messeinrichtung (200, 400). Die Messeinrichtung (200, 400) weist zumindest einen Messtaster (204, 206, 404) auf, wobei ein Zentrierstück (134, 334) in zumindest einer Richtung seitlich zur Mittenachse (82) gegenüber dem Spannfutter beweglich ist, und wobei der zumindest eine Messtaster (204, 206, 404) integriert ist, um anhand der seitlichen Bewegung des Zentrierstücks (134, 334) eine Position der Mittenachse (82) zu bestimmen. Eine Werkzeugmaschine (10) zur spanenden Bearbeitung von Felgen (70) weist einen Werkstückhalter (26) mit einer solchen Haltevorrichtung (100) auf.

## Beschreibung

Die vorliegende Offenbarung bezieht sich auf eine Haltevorrichtung zum Halten und Fixieren einer Felge während der Bearbeitung in einer Werkzeugmaschine sowie auf eine mit einer solchen Haltevorrichtung versehene Werkzeugmaschine zur Felgenbearbeitung.

Aus der WO 2019/178629 A1 sind eine Messvorrichtung zur Vermessung eines Versatzes einer Rotationsachse und/oder der Lage eines zur Bearbeitung in einer Aufspanneinheit gespannten Kfz-Rades, sowie eine Aufspanneinheit mit einer solchen Messvorrichtung bekannt. Aus der US 10,751,807 B2 ist eine Vorrichtung zur hochpräzisen Aufnahme einer Felge in einem Bearbeitungszentrum bekannt, wobei dies eine aktive Zentrierung der Felge umfasst. Aus der CN 102218668 A ist eine Schwenkbrücke zur Aufnahme einer Felge in einer Werkzeugmaschine bekannt, zur Bearbeitung von Bohrungen für Radbolzen und von Ventilbohrungen.

Aus der WO 2009/109384 A1 ist eine Werkzeugmaschine für die spanende Bearbeitung von Felgen bekannt, mit einer Werkstückauflage zum Aufspannen einer Felge, einem mindestens entlang einer Achse bewegbaren Werkzeughalter zum Halten eines Werkzeugs für die Bearbeitung der Felge und Werkstückhalteeinheiten zum Festhalten der Felge während der Bearbeitung, wobei die Werkstückhalteeinheiten außerhalb der in aufgespanntem Zustand von der Felge überdeckten Werkstückauflagefläche der Werkstückauflage angeordnet sind und jeweils ein Halteelement zum Festhalten der Felge aufweisen, und wobei die Haltelemente jeweils parallel zur Werkstückauflagefläche zum Zentrieren und Festhalten in Richtung auf die Felge verfahrbar sind.

Mit derartigen Werkzeugmaschinen und Haltevorrichtungen können beispielsweise Leichtmetallfelgen (Alufelgen) spanend bearbeitet werden. Auf diese Weise können beispielsweise Aufnahmelöcher für Radschrauben oder Radbolzen erzeugt werden. Die Bearbeitung kann auch zur Erzeugung einer Aufnahme für das Reifenventil genutzt werden. Auch ein selektives Abtragen einer Beschichtung/Lackierung ist vorstellbar.

Bei einer Werkzeugmaschine im Sinne der vorliegenden Offenbarung handelt es sich insbesondere um eine mehrachsige Werkzeugmaschine, die beispielsweise als Fertigungszentrum oder flexible Fertigungszelle gestaltet ist. Eine derartige Werkzeugmaschine weist regelmäßig eine Werkzeugspindel mit einem Werkzeughalter zur Aufnahme eines Werkzeugs sowie zumindest einen Werkstückhalter zur Aufnahme des zu bearbeitenden Werkstücks auf. Bei dem am Werkzeughalter aufzunehmenden Werkzeug kann es sich beispielhaft um ein Bohrwerkzeug oder ein Fräswerkzeug handeln.

Für die Genauigkeit der Bearbeitung spielt eine genaue Orientierung und Ausrichtung der zu bearbeitenden Felge eine große Rolle. Dies bezieht sich beispielsweise auf eine Ausrichtung der Aufnahmelöcher für die Radschrauben in Bezug auf eine Zentrierungsbohrung in der Felgenmitte. Die Haltevorrichtung dient daher häufig auch zur Zentrierung der Felge. Es hat sich jedoch gezeigt, dass eine hochgenaue mechanische Zentrierung oft mit Schwierigkeiten verbunden ist. Mit Rücksicht auf die angestrebten minimierten Taktzeiten wird häufig eine Restungenauigkeit bei der mechanischen Aufnahme und Ausrichtung akzeptiert, beispielsweise indem die Haltevorrichtung als Vorzentrierung genutzt wird. Üblicherweise muss dann mittels einer Messeinrichtung eine Ist-Position der Felge ermittelt werden, so dass im Falle einer Abweichung (Offset) das Bearbeitungsprogramm bzw. das genutzte Koordinatensystem entsprechend angepasst werden kann.

Eine solche Erfassung der Ist-Position zielt beispielsweise auf die Bestimmung der Lage der Mittenachse der Felge ab. Zu diesem Zweck muss die Messeinrichtung beispielsweise mit einem Messtaster eine Mehrzahl von Punkten der Felge anfahren und antasten. Ein Messtaster kann beispielsweise (temporär) am Werkzeughalter der Werkzeugmaschine aufgenommen und mittels der integrierten Maschinenkinematik (angetriebene Achsen zur Erzeugung einer Relativbewegung zwischen Werkzeughalter und Werkstückhalter) relativ zum Werkstück verfahren werden. Grundsätzlich könnte auch eine zusätzliche Kinematik für die Messeinrichtung genutzt werden. Beide Varianten erhöhen den Aufwand für die bauliche Integration. Ferner ist ein gewisser Zeitaufwand erforderlich, um die Position und/oder Orientierung der Mittenachse der Felge genau zu erfassen.

Vor diesem Hintergrund liegt der vorliegenden Offenbarung die Aufgabe zugrunde, eine Haltevorrichtung zum Halten und Fixieren einer Felge während einer Bearbeitung in einer Werkzeugmaschine anzugeben, die zur Erhöhung der Produktivität beitragen können. Möglichst soll dies eine Reduzierung der Taktzeit bei der Bearbeitung von Felgen ermöglichen. Gleichwohl soll die Bearbeitung mit der erforderlichen Genauigkeit und Prozesssicherheit gewährleistet werden. Die Haltevorrichtung soll auch im Rahmen der Serienfertigung robust und zuverlässig nutzbar sein, wobei dies gegebenenfalls auch widrige Umgebungsbedingungen (beispielsweise Verschmutzung durch Kühlschmierstoffe und/oder Späneeintrag im Arbeitsraum) und Ähnliches berücksichtigt. Vorzugsweise kann die Haltevorrichtung mit geringem baulichen Zusatzaufwand für die erweiterte Funktionalität bereitgestellt werden. Schließlich soll eine Werkzeugmaschine zur Bearbeitung von Felgen angegeben werden, die mit einer solchen Haltevorrichtung versehen ist.

Gemäß einem ersten Aspekt bezieht sich die vorliegende Offenbarung auf eine Haltevorrichtung zum Halten und Fixieren einer Felge während einer Bearbeitung in einer Werkzeugmaschine, wobei die Haltevorrichtung Folgendes aufweist:
- eine Auflageeinheit zur Aufnahme eines Felgenhorns einer Felge, die eine Mittenachse aufweist,
   wobei die Auflageeinheit zumindest eine verfahrbare Klemmbacke aufweist, die dazu ausgebildet ist, von außen an das Felgenhorn anzugreifen, um die Felge an der Haltevorrichtung zu sichern, und
   wobei die Auflageeinheit eine Auflageebene für das Felgenhorn definiert,
- eine Abstützeinheit mit einer Zentrierbasis und einem relativ zur Zentrierbasis beweglichen Zentrierstück, das dazu ausgebildet ist, an eine Nabenöffnung der Felge, insbesondere in koaxialer Orientierung zur Mittenachse der Felge, anzugreifen, und
- eine Messeinrichtung mit zumindest einem Messtaster,
   wobei das Zentrierstück in zumindest einer Richtung seitlich zur Mittenachse gegenüber der Zentrierbasis beweglich ist, und
   wobei der zumindest eine Messtaster in die Abstützeinheit integriert ist, um anhand der seitlichen Bewegung des Zentrierstücks eine Position der Mittenachse zu bestimmen.

Die Aufgabe der Offenbarung wird auf diese Weise gelöst.

Die Haltevorrichtung erlaubt eine Aufnahme und Fixierung einer Felge an einem Werkstückhalter (auch: Werkstückauflage) einer Werkzeugmaschine zu Bearbeitungszwecken. Die integrierte Messeinrichtung erlaubt eine Erfassung des Mittelpunkts bzw. der Lage der Mittenachse der Felge bei aufgenommener Felge. Auf diese Weise kann eine etwaige Abweichung (beispielsweise Mittenversatz im Sinne einer Querverschiebung gegenüber einer Soll-Lage einer Zentrierachse) der Lage der Felge gegenüber der Abstützeinheit erfasst werden. Die Abstützeinheit kann auch als messende Abstützeinheit bezeichnet werden.

Wenn eine solche Abweichung (üblicherweise ein seitlicher Versatz in einer oder zwei Richtungen senkrecht zur Mittenachse) festgestellt wird, kann die Ist-Position der Felgenmitte bei der Bearbeitung berücksichtigt und kompensiert werden. Die Bestimmung der Mittenachse bzw. des Mittelpunkts erfordert nur einen sehr geringen Zeitaufwand, weil die Messeinrichtung in die Haltevorrichtung baulich integriert ist, insbesondere in deren Abstützeinheit. Wenn also die Felge beispielsweise durch die zumindest eine Klemmbacke der Auflageeinheit an der Haltevorrichtung fixiert wird, kann mit allenfalls nur geringer Zeitverzögerung die Position von Mittenachse bzw. Mittelpunkt ermittelt werden. In einer beispielhaften Ausgestaltung sind sechs zentrisch verfahrbare Klemmbacken vorgesehen.

Zumindest in beispielhaften Ausgestaltungen kann folglich auf separates Messequipment verzichtet werden. Es ist also nicht erforderlich, die Maschinenkinematik und/oder eine zusätzliche Kinematik zu nutzen, um anhand einer beispielsweise taktilen Messung den Mittelpunkt oder die Mittenachse einer bereits eingespannten Felge zu bestimmen. Das erforderliche Messequipment ist bereits in die Haltevorrichtung integriert.

Mit anderen Worten dient also die Abstützeinheit nicht notwendigerweise dazu, die Felge (gegebenenfalls mechanisch) zu zentrieren. Stattdessen ist die Abstützeinheit dazu befähigt, sich an eine aktuelle Position der Felge anzupassen, insbesondere an einen Mittelpunkt der Nabenöffnung der Felge. Die Abstützeinheit kann sich an diese Position anpassen, indem das Zentrierstück gegenüber der Zentrierbasis bewegt wird. Dies umfasst üblicherweise eine Querverschiebung senkrecht zur Mittenachse. Diese Verschiebung kann nun als Versatz durch die Messeinrichtung bestimmt werden. Mit anderen Worten ist das Zentrierstück in einer beispielhaften Ausgestaltung schwimmend relativ zur Mitttenachse gelagert.

Auch bei einer mechanisch nicht perfekt zentrisch ausgerichteten Felge ist daher eine hochgenaue, präzise und wiederholgenaue Bearbeitung möglich. Dies gilt beispielsweise für die Bearbeitung der Bohrungen für die Radschrauben. Auf diese Weise eignet sich die Haltevorrichtung auch für die Serienfertigung oder Massenfertigung von Felgen. Durch die Messeinrichtung wird zumindest ein Mittelpunkt der Felge erfasst. Die Messung erfolgt üblicherweise in einer Ebene, die von der Auflageebene parallel beabstandet und der Nabenöffnung der Felge zumindest benachbart ist.

Die Bearbeitung der Schraubenbohrungen erfolgt beispielsweise mit gestuften Werkzeugen in einem nicht vorgegossenem Lochkreis mit einer Kegel-Senkung. Hierfür ist ein hoher Traganteil hilfreich. Die Aufnahme der Felge durch die Auflageeinheit und die Abstützeinheit gewährleistet ein hohen Traganteil. Die Abstützung verhindert das Durchbiegen der Felge durch die Belastung bei der Bearbeitung. Dies führt zu einer erhöhten Qualität der Oberfläche, beispielsweise im Bereich der Schaubbohrungen.

Die Abstützeinheit und der zumindest eine Messtaster der Messeinrichtung sind am Werkstückhalter bzw. der Werkstückauflage montiert. Üblicherweise wird die Felge mit ihrer Rückseite (Innenseite) auf dem Werkstückhalter abgelegt bzw. auf die Abstützeinheit aufgesetzt. Demgemäß erfolgt die Bestimmung eines etwaigen Versatzes der Felge auch von der Rückseite/Innenseite her. Mit anderen Worten muss nicht von der Vorderseite/Außenseite der Felge eine Messung mit einem entsprechend zu führenden Messtaster erfolgen. Die Vorderseite/Außenseite der Felge steht für eine Bearbeitung zur Verfügung. Die Vorderseite/Außenseite der Felge ist diejenige Seite, die für einen Passanten sichtbar ist, der ein mit der Felge ausgerüstetes Fahrzeug von außen betrachtet. Die Rückseite/Innenseite ist diejenige Seite der Felge, die üblicherweise der Bremsscheibe oder Bremstrommel bzw. der Radnabe zugewandt ist. Die integrierte Messung erspart beispielsweise das Einwechseln und Auswechseln eines an der Werkzeugspindel gehaltenen Messgeräts. Dies kann zu einer beträchtlichen Zeitersparnis führen, die Taktzeit kann sich beispielhaft um 10 Sekunden oder gar 15 Sekunden pro Felge reduzieren.

In der Haltevorrichtung mit den Klemmbacken ist die Abstützeinheit mit integrierter Messeinrichtung üblicherweise im Zentrum montiert. Sodann kann die Abstützeinheit nach dem Fixieren der Felge ausfahren, um die Felge zentral abzustützen, und um die Mittenposition zu bestimmen. In der Grundstellung ist die Abstützeinheit zurückgefahren, das Zentrierstück ist beispielhaft konzentrisch in Bezug auf eine Mitttenachse der Abstützeinheit orientiert.

Die Aufnahme und Klemmung der Felge mit der Auflageeinheit erfolgt üblicherweise am inneren Felgenhorn der Felge. Die Felge liegt üblicherweise mit ihrer Innenseite an der Auflageeinheit auf. Dort kann die zumindest eine verfahrbare Klemmbacke die Felge radial und axial (in Bezug auf die Mittenachse der Felge) sichern.

Bei der Felge kann es sich beispielhaft um eine Felge aus einer Aluminiumlegierung oder Magnesiumlegierung handeln. Die Felge kann auch aus einem Stahlwerkstoff (Stahllegierung) bestehen. Die Felge kann grundsätzlich auch aus verstärktem Kunststoff bestehen, beispielsweise GFK (glasfaserverstärkter Kunststoff) oder CFK (kohlenstofffaserverstärkter Kunststoff).

Zumindest der zumindest eine Messtaster der Messeinrichtung ist baulich in die Abstützeinheit integriert und daher auch gut geschützt. Es ist also nicht erforderlich, den zumindest einen Messtaster zu entfernen, wenn die Bearbeitung erfolgt.

Die Messeinrichtung ist dazu ausgebildet, eine insbesondere als Querverschiebung stattfindende Relativbewegung zwischen dem Zentrierstück und der Zentrierbasis zu erfassen. Die Zentrierbasis stellt beispielhaft eine Zentrierachse bereit. Das Zentrierstück passt sich an einen gegebenen Mittelpunkt bzw. eine gegebene Mittenachse der Felge an. Ein etwaiger Versatz kann durch die Messeinrichtung bestimmt werden, wenn der zumindest eine Messtaster entsprechend ausgelenkt wird. Das Zentrierstück kann auch als Zentrierkonus oder Zentrierdorn bezeichnet werden.

Die Auflageeinheit umfasst regelmäßig eine Mehrzahl von Klemmbacken, von denen zumindest einige radial in Bezug auf die Zentrierachse bzw. radial in Bezug auf die idealerweise konzentrisch zur Zentrierachse orientierte Mittenachse verfahrbar sind. Beispielhaft sind drei oder sechs Klemmbacken vorgesehen, die regelmäßig oder unregelmäßig über den Durchmesser der Felge an der Auflageeinheit verteilt sind. Üblicherweise sind sechs gleichmäßig am Umfang verteilte Klemmbacken vorgesehen, die zentrisch verfahrbar sind. Wenn die Klemmbacken radial in Richtung auf ein Zentrum der Auflageeinheit bewegt werden, kann die Felge von außen fixiert werden, beispielsweise über das innere Felgenhorn, das an der Auflagefläche der Auflageeinheit aufliegt.

Der Klemmvorgang führt unter Umständen zu einer einem leichten Versatz zwischen der Mittenachse und der Zentrierachse. Dieser Versatz ist jedoch überwiegend hinreichend klein, so dass eine genaue Messung mit zumindest einem auslenkbaren Messtaster erfolgen kann. Der zumindest eine auslenkbare Messtaster hat beispielhaft einen Messbereich von +/-1 mm. In einer weiteren beispielhaften Ausgestaltung hat der zumindest eine auslenkbare Messtaster einen Messbereich von +/- 0.5 mm. In einer weiteren beispielhaften Ausgestaltung hat der zumindest eine auslenkbare Messtaster einen Messbereich von +/- 0.25 mm. Dies gilt beispielsweise jeweils für eine von zwei horizontalen Achsen (X-Achse und Y-Achse).

Weil ein etwaiger Versatz zwischen der Zentrierachse und der Mitte der Felge bestimmt und (im Programmablauf bei der NC-gestützten Bearbeitung) kompensiert werden kann, ist eine sichere und genaue Funktion auch bei toleranzbehafteten Klemmbacken bzw. einem toleranzbehafteten Mechanismus zur Bewegung der Klemmbacken möglich. Dies kann den Aufwand zur Herstellung der Haltevorrichtung verringern, und zwar ohne nachteilige Auswirkungen auf die Präzision der Bearbeitung.

Gemäß einer beispielhaften Ausgestaltung der Haltevorrichtung weist die Messeinrichtung einen ersten Messtaster und einen zweiten Messtaster auf, die schräg zueinander, insbesondere quer zueinander, orientiert sind, um eine Position der Mittenachse in zwei Richtungen zu bestimmen, die parallel zur Auflageebene orientiert sind. Die Erfassungsrichtung der Messtaster ist beispielhaft orthogonal zueinander orientiert. Die Messtaster sind beispielhaft dazu ausgestaltet, Bewegungen zwischen dem Zentrierstück und der Zentrierbasis orthogonal zur Mittenachse zu bestimmen.

Gemäß einer weiteren beispielhaften Ausgestaltung ist der zumindest eine Messtaster ausgelenkt, wenn das Zentrierstück relativ zu der Zentrierbasis gegenüber einer konzentrischen Soll-Orientierung seitlich versetzt ist. Diese Auslenkung kann erfasst werden, so dass auf diese Weise ein etwaiger Querversatz zwischen der Mittenachse der Felge und der Zentrierbasis (vergleiche Zentrierachse) bestimmt werden kann.

Gemäß einer weiteren beispielhaften Ausgestaltung umfasst demgemäß die Messeinrichtung einen ersten Wegsensor für den ersten Messtaster zu Erfassung einer Position der Mittenachse in einer ersten Richtung, wobei die Messeinrichtung ferner einen zweiten Wegsensor für einen zweiten Messtaster zu Erfassung einer Position der Mittenachse in einer zweiten Richtung aufweist. Beispielhaft ist die erste Richtung parallel zu einer (globalen) X-Richtung orientiert. Beispielhaft ist die zweite Richtung parallel zu einer (globalen) Y-Richtung orientiert.

Gemäß einer weiteren beispielhaften Ausgestaltung ist dem zumindest einen Messtaster einer Kontaktfeder zugeordnet, die dem Messtaster bezüglich der Mittenachse gegenüberliegt. Auf diese Weise können beispielsweise mit nur einem Messtaster pro Messrichtung/Messachse positive als auch negative Positionsabweichungen zwischen dem Zentrierstück und der Zentrierbasis erfasst werden.

Gemäß einer weiteren beispielhaften Ausgestaltung ist der zumindest eine Messtaster parallel zur Auflageebene auslenkbar. Beispielhaft umfasst der Messtaster ein Federelement, das einerseits eine Auslenkung erlaubt und andererseits eine Rückstellkraft in Richtung auf eine Neutralstellung bereitstellt. Beispielhaft handelt es sich bei dem Federelement um eine Blattfeder. Die Auslenkung des Messtasters wird beispielsweise mit einem Wegsensor bestimmt. Sodann kann der Versatz zwischen dem Zentrierstück und der Zentrierbasis ermittelt werden. Bei Verwendung zweier Messtaster mit zueinander geneigten Messachsen kann der Versatz in einer Ebene bestimmt werden, die senkrecht zur Mittelachse liegt.

Gemäß einer weiteren beispielhaften Ausgestaltung ist der zumindest eine Messtaster innerhalb der Abstützeinheit umschlossen und vor einem Kühlschmiermitteleintrag geschützt. Weil der zumindest eine Messtaster zumindest gemäß dieser Ausgestaltung nicht die Felge, sondern das Zentrierstück kontaktiert, um die Mitte der Felge zu erfassen, ist ein mehrseitiger oder allseitiger Schutz durch die Abstützeinheit selbst ermöglicht. Der zumindest eine Messtaster ist baulich in die Abstützeinheit integriert.

Gemäß einer weiteren beispielhaften Ausgestaltung weist die Messeinrichtung eine stabförmige Sonde auf, die den zumindest einen Messtaster trägt, wobei die stabförmige Sonde in einer ersten Richtung und einer zweiten Richtung schwenkbar ist, um Auslenkungen in zwei Achsen zu erlauben. Auf diese Weise kann mit nur einem Messtaster ein Querversatz in zwei Raumrichtungen bestimmt werden. Beispielhaft ist die stabförmige Sonde an ihrer Basis mit zwei Wegsensoren gekoppelt, die eine aktuelle Auslenkung der Sonde in zwei Achsen erfassen können.

Gemäß einer weiteren beispielhaften Ausgestaltung weist die Abstützeinheit eine Längsführung zwischen der Zentrierbasis und dem Zentrierstück auf, die eine Längsbewegung des Zentrierstücks parallel zur Mittenachse erlaubt. Das Zentrierstück ist relativ zur Zentrierbasis entlang der Längsführung verfahrbar. Auf diese Weise kann die Abstützeinheit an Felgen unterschiedlicher Breite angepasst werden. Die Längsbewegung des Zentrierstücks erfolgt üblicherweise parallel zur Mittenachse bzw. zur Zentrierachse und relativ zur Zentrierbasis bzw. der Auflagefläche.

Gemäß einer weiteren beispielhaften Ausgestaltung ist das Zentrierstück kraftgetrieben in die Nabenöffnung der Felge fahrbar. Zu diesem Zweck kann die Längsführung mit einem geeigneten Antrieb und/oder einem geeigneten Vorspannelement gekoppelt werden.

Gemäß einer weiteren beispielhaften Ausgestaltung weist die Längsführung einen Zylinder und einen im Zylinder verfahrbaren Kolben auf, der ein Schubstück trägt, das an seinem vom Zylinder abgewandten Ende das Zentrierstück verschieblich aufnimmt. Das Zentrierstück ist insbesondere querverschieblich zur Mittenachse. Auf diese Weise kann sich das Zentrierstück an die Nabenöffnung der Felge anpassen, auch wenn es einen Querversatz zwischen dem Mittelpunkt der Felge und der durch die Zentrierbasis definierten Zentrierachse gibt.

Gemäß einer weiteren beispielhaften Ausgestaltung erstreckt sich zwischen dem zwischen dem Zentrierstück und dem Zylinder eine Abdeckung, insbesondere in Form eines Faltenbalgs. Dies verbessert den Schutz der Komponenten der Abstützeinheit.

Gemäß einer weiteren beispielhaften Ausgestaltung trägt die Zentrierbasis an ihrem der Nabenöffnung zugewandten Ende einen Sitz für das Zentrierstück, wobei das Zentrierstück relativ zum Sitz in einer zur Auflageebene parallelen Ebene verschieblich ist. Diese Bewegung kann mit der Messeinrichtung erfasst werden.

Beispielhaft ist eine formschlüssige oder kraftschlüssige Lagesicherung für die parallele Ausrichtung zwischen dem Zentrierstück und dem Sitz vorgesehen. Auf diese Weise wird sichergestellt, dass das Zentrierstück nicht vom Sitz abheben oder deutlich gegenüber dem Sitz kippen kann. Somit wird sichergestellt, dass sich eine Achse durch das Zentrierstück konzentrisch zur Mittenachse der Felge ausrichtet, sofern das seitliche Spiel (Querverschiebung) zwischen dem Zentrierstück und der Zentrierbasis eine solche Anpassung erlaubt. In einer beispielhaften Ausgestaltung umgreift das Zentrierstück den Sitz. Mit anderen Worten ist der Sitz beispielsweise scheibenartig gestaltet, wobei das Zentrierstück sowohl an eine Vorderseite als auch an eine Rückseite der Scheibe angreift.

Gemäß einer weiteren beispielhaften Ausgestaltung ist der zumindest eine auslenkbare Messtaster am Sitz festgelegt, um Bewegungen des Zentrierstücks relativ zum Sitz zu erfassen. Dies umfasst eine mittelbare oder direkte Montage des Messtasters am Sitz.

Gemäß einer weiteren beispielhaften Ausgestaltung ist das Zentrierstück am Sitz verschieblich aufgenommen, wobei das Zentrierstück den Sitz umgreift.

Gemäß einer weiteren beispielhaften Ausgestaltung ist der Sitz scheibenartig gestaltet, wobei das Zentrierstück einen Ring aufweist, der einen formschlüssigen Sitz des Zentrierstücks am Sitz bereitstellt und das Zentrierstück gegen ein Abheben vom Sitz sichert.

Gemäß einer weiteren beispielhaften Ausgestaltung erstreckt sich zwischen dem Zentrierstück und dem Sitz ein Umfangsspalt, der einen möglichen Bereich für eine Querverschiebung des Zentrierstücks Bezug auf die Zentrierbasis definiert

Gemäß einer weiteren beispielhaften Ausgestaltung ist am Zentrierstück eine Innenfläche ausgebildet, insbesondere eine zylindrische Innenfläche, an der der zumindest eine Messtaster anliegt. Auf diese Weise muss für die Messung nicht direkt die Felge angetastet werden. Stattdessen zentriert sich das Zentrierstück an der Nabenöffnung der Felge. Der zumindest eine Messtaster kontaktiert die Innenfläche des Zentrierstücks, um die Querverschiebung des Zentrierstücks gegenüber der Zentrierbasis zu erfassen. Auf diese Weise eignet sich die Messeinrichtung für unterschiedliche Felgen. Es muss nicht notwendigerweise eine Anpassung an einen neuen Felgentyp vorgenommen werden. Das Zentrierstück umfasst beispielhaft eine Konusfläche, die selbstzentrierend an der Nabenöffnung der Felge zur Anlage kommt. Diese Gestaltung schützt ferner den oder die Messtaster vor übermäßiger Verschmutzung. Gemäß einer weiteren beispielhaften Ausgestaltung liegt auch zumindest eine dem zumindest einen Messtaster gegenüberliegende Kontaktfeder an der Innenfläche an.

Gemäß einer weiteren beispielhaften Ausgestaltung weist die Haltevorrichtung ferner an einer von der Zentrierbasis abgewandten Seite des Zentrierstücks eine Reflektorfläche auf, die zu Erfassung einer Axialposition der Felge optisch antastbar ist. Beispielhaft ist die Reflektorfläche an einer Spitze des Zentrierstücks angeordnet. Beispielhaft ist die Reflektorfläche konzentrisch zur Mittenachse ausgerichtet. Die Reflektorfläche ist beispielhaft als spiegelnde Reflektorfläche und insbesondere als erhabene, spiegelnde Reflektorfläche gestaltet. In einer beispielhaften Ausgestaltung ist die Reflektorfläche insbesondere dazu ausgestaltet, mit Laserlicht angestrahlt zu werden, um dieses parallel zu reflektieren.

Mit anderen Worten kann also die Messeinrichtung gemäß diesem Aspekt eine entsprechende Abstandsmesseinheit aufweisen, die das Zentrierstück optisch antastet. Es eignen sich beispielsweise elektrooptische Messverfahren. Beispielhaft umfasst die Abstandsmesseinheit eine Sender-Empfängereinheit für Laserlicht.

Die Abstandsmessung kann beispielhaft mittels Laserentfernungsmessung und/oder einem Laserinterferometer erfolgen. Auch bei der Abstandsmessung geht es regelmäßig darum, etwaige Abweichungen einer Ist-Lage von einer Soll-Lage zu ermitteln. Dies kann kontaktlos und hochgenau etwa mittels Laserinterferometrie erfolgen. Bei einer kontaktlosen Messung kann auf einen (taktilen) Messtaster verzichtet werden. Dies ist beispielsweise in einer Ladestation einer Werkzeugmaschine, aber auch im Arbeitsraum von Vorteil.

Gemäß einer weiteren beispielhaften Ausgestaltung weist die Auflageeinheit eine Mehrzahl von Klemmbacken auf, die jeweils eine Auflagefläche für das Felgenhorn bereitstellen. Auf diese Weise ergibt sich insgesamt die Auflageebene für das Felgenhorn.

Gemäß einer weiteren beispielhaften Ausgestaltung weist die zumindest eine verfahrbare Klemmbacke zumindest zwei insbesondere parallel zueinander versetzte Auflageflächen auf, so dass die Auflageeinheit insgesamt zumindest zwei Auflageebenen für Felgen mit unterschiedlichem Durchmesser bereitstellt. Auf diese Weise kann beispielhaft eine erste Auflagefläche für Felgen mit einem Felgendurchmesser in einem ersten Durchmesserbereich und eine zweite Auflagefläche für Felgen mit einem Felgendurchmesser in einem zweiten Durchmesserbereich bereitgestellt werden. Beispielhaft sind drei oder mehr verfahrbare Klemmbacken vorgesehen, die jeweils zwei Auflageflächen aufweisen, die parallel entlang der Mittenachse relativ zueinander versetzt sind. Zusätzlich sind die Auflageflächen einer jeweiligen Klemmbacke radial in Bezug auf die Mittenachse relativ zueinander versetzt.

Auf diese Weise wird beispielhaft eine erste, erhöhte und durchmessergroße Auflageebene und eine zweite, versenkte und durchmesserkleine Auflageebene bereitgestellt. Dies vergrößert den Anwendungsbereich und erhöht die Flexibilität der Haltevorrichtung. Die zweite Auflageebene eignet sich beispielhaft für Felgen mit einem Nenn-Durchmesser von 14 Zoll bis 18 Zoll. Die erste Auflageebene eignet sich beispielhaft für Felgen mit einem Nenn-Durchmesser von 19 Zoll bis 24 Zoll. Dies ist nicht einschränkend zu verstehen. Die Gestaltung mit zwei unterschiedlichen Auflageebenen eliminiert den Rüstaufwand im Falle eines ansonsten gegebenenfalls erforderlichen Backenwechsels.

Gemäß einer weiteren beispielhaften Ausgestaltung weist die zumindest eine verfahrbare Klemmbacke eine Auflagefläche für das Felgenhorn auf, wobei in der Auflagefläche ein Druckstück angeordnet ist, das gegen die Kraft eines Vorspannelements zwischen einer erhabenen Position und einer bündig eingefahrenen Position beweglich ist, und wobei sich das Druckstück im Falle einer bündigen Auflage des Felgenhorns auf der Auflagefläche in der bündig eingefahrenen Position befindet. Es ist günstig, drei von sechs Klemmbacken entsprechend zu bestücken.

Auf diese Weise kann sichergestellt werden, dass die Felge auch wirklich bündig in der Auflageebene der Auflageeinheit auf der Auflagefläche der zumindest einen Klemmbacke aufliegt. Wenn beispielsweise ein Span zwischen der Auflagefläche und dem Felgenhorn vorhanden ist, könnte die Felge das erhabene Druckstück nicht in eine bündige Position bringen. Die Position des Druckstücks kann über einen Schalter oder Sensor direkt oder indirekt überwacht werden. Beispielsweise ist eine indirekte Überwachung mittels Druckluft vorstellbar. Auf diese Weise wird sichergestellt, dass die Felge bündig aufliegt, bevor die Bearbeitung erfolgt.

Das Druckstück kann auch als Druckteller bezeichnet werden. Mit dem Druckstück kann eine Spanerkennung bzw. eine Auflageerkennung für die Felge realisiert werden. Wenn das Druckstück bündig (eingedrückt) in der Auflagefläche positioniert ist, ist sichergestellt, dass die Felge auch bündig aufliegt.

Gemäß einer weiteren beispielhaften Ausgestaltung weist das Druckstück einen Druckteller auf, der durch ein Vorspannelement in eine erhabene Position gedrängt wird, und dass der Druckteller über eine Umlenkung mit einem Schieber gekoppelt ist, der in Richtung auf einen Schalter verfahrbar ist, um den Schalter zu betätigen.

In einer weiteren beispielhaften Ausgestaltung weist die Auflageeinheit eine gerade Anzahl von Klemmbacken auf, die Klemmbacken eines ersten Typs und Klemmbacken eines zweiten Typs aufweisen, wobei sowohl die Klemmbacken des ersten Typs als auch die Klemmbacken des zweiten Typs jeweils zwei zueinander versetzte Auflageflächen aufweisen, die zwei zueinander versetzte Auflageebenen für Felgen unterschiedlichen Durchmessers definieren, und wobei bei den Klemmbacken des ersten Typs das Druckstück in der ersten Auflagefläche und bei den Klemmbacken des zweiten Typs das Druckstück in der zweiten Auflagefläche angeordnet ist. Beispielsweise umfasst die Auflageeinheit sechs Klemmbacken, wobei sich drei Klemmbacken des ersten Typs und drei Klemmbacken des zweiten Typs jeweils einander abwechseln. Auf diese Weise kann auch bei Klemmbacken mit zwei Auflageebenen eine Spanerkennung erfolgen.

Gemäß einer weiteren beispielhaften Ausgestaltung weist die zumindest eine verfahrbare Klemmbacke zumindest eine einen Rand des Felgenhorns übergreifende Klemmfläche auf, die gemeinsam mit der Auflagefläche einen Winkel einschließt, der kleiner als 90° ist. Auf diese Weise kann die Klemmbacke über die Klemmfläche eine auf das Zentrum gerichtete (radiale) Kraftkomponente und eine parallel zur Mittenachse gerichtete axiale Kraftkomponente auf das Felgenhorn aufbringen. Die Felge wird über ihr Felgenhorn radial und axial an der Haltevorrichtung gesichert. In einer beispielhaften Ausgestaltung beträgt der Winkel zwischen der Klemmfläche und der Auflagefläche maximal 75°. In einer beispielhaften Ausgestaltung beträgt der Winkel zwischen der Klemmfläche und der Auflagefläche maximal 60°. In einer beispielhaften Ausgestaltung beträgt der Winkel zwischen der Klemmfläche und der Auflagefläche maximal 45°. Der Winkel ist in Richtung auf die Mittenachse geöffnet. Die entgegengesetzte Spitze des Winkels zeigt radial weg von der Mittenachse.

Gemäß einem weiteren Aspekt bezieht sich die vorliegende Offenbarung auf eine Werkzeugmaschine zur spanenden Bearbeitung von Felgen, die Folgendes aufweist:
- eine Werkzeugspindel mit einem Werkzeughalter zur Aufnahme eines Werkzeugs zur spanenden Bearbeitung, und
- einen Werkstückhalter mit einer Haltevorrichtung gemäß zumindest einer der hierin beschriebenen Ausgestaltungen,
   wobei der Werkzeughalter und der Werkstückhalter in zumindest zwei translatorischen Achsen, die orthogonal zueinander orientiert sind, relativ zueinander verfahrbar sind, um eine mit der Haltevorrichtung fixierte Felge mit dem Werkzeug spanend zu bearbeiten.

Durch die integrierte Messeinrichtung zur Bestimmung der Mitte der Felge lassen sich Taktzeiten reduzieren. Gleichwohl können die Felgen präzise und wiederholgenau bearbeitet werden.

Gemäß einer beispielhaften Ausgestaltung weist die Werkzeugmaschine ferner eine Abstandsmesseinheit, insbesondere eine Abstandsmesseinheit mit einer Sender-Empfängereinheit für Laserlicht, auf, die bedarfsweise in den Werkzeughalter einwechselbar oder in einer Ladestation der Werkzeugmaschine angeordnet ist, um eine Axialposition der Felge entlang der Mittenachse zu erfassen. Die Abstandsmesseinheit peilt eine Reflektorfläche an, die am Zentrierstück der Abstützeinheit ausgebildet ist. Bei Nutzung einer optischen oder elektrooptischen Abstandsmesseinheit ist kein berührender Kontakt mit der Abstützeinheit oder der Felge erforderlich.

Gemäß einer weiteren beispielhaften Ausgestaltung weist die Werkzeugmaschine ferner eine Steuereinrichtung auf, die dazu ausgebildet ist, anhand von Positionsdaten, die die Messeinrichtung übermittelt, einen Versatz zwischen einem Maschinenkoordinatensystem und einer gegebenen Position und Orientierung der Felge zu bestimmen und bei der Bearbeitung zu berücksichtigen. Auf diese Weise kann eine Querverschiebung bzw. ein Querversatz ermittelt und bei der Bearbeitung durch die Steuereinrichtung rechentechnisch kompensiert werden. Damit hat ein solcher Querversatz keine nachteiligen Auswirkungen auf die Genauigkeit der Bearbeitung.

Gemäß einer weiteren beispielhaften Ausgestaltung weist die Werkzeugmaschine ferner eine Werkstückwechseleinrichtung mit einem Drehtisch auf, der einen ersten Werkstückhalter und einen gegenüberliegenden zweiten Werkstückhalter trägt, wobei der zweite Werkstückhalter in einer Wechselposition ist, wenn der erste Werkstückhalter in einer Bearbeitungsposition ist, und wobei der erste Werkstückhalter in einer Wechselposition ist, wenn der zweite Werkstückhalter in einer Bearbeitungsposition ist

Auf diese Weise kann die Leistung pro Zeiteinheit erhöht werden, weil das Auswechseln bzw. Be- und Entladen der Felge zeitparallel zur Bearbeitung erfolgen kann. Auf diese Weise können die Zykluszeiten weiter reduziert werden. An jedem der Werkstückhalter kann eine Haltevorrichtung gemäß zumindest einer der hierin beschriebenen Ausgestaltungen aufgenommen sein. Gegebenenfalls weist der Drehtisch zwei um 180° zueinander versetzte Schwenkbrücken auf, die jeweils eine Werkzeugauflage mit einem Werkstückhalter ausbilden.

Bei Nutzung einer Werkstückwechseleinrichtung mit zumindest zwei Haltevorrichtungen, von denen eine in der Bearbeitungsposition und eine andere in der Wechselposition ist, kann die Bestimmung der Mitte der Felge bereits beim Beladen oder unmittelbar nach dem Beladen erfolgen, weil die Messeinrichtung in die Haltevorrichtung integriert ist.

Es versteht sich, dass die vorstehend genannten und die nachstehend noch zu erläuternden Merkmale der Offenbarung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile ergeben sich aus der nachfolgenden Beschreibung mehrerer bevorzugter Ausführungsbeispiele unter Bezugnahme auf die Zeichnungen. Es zeigen:
- Fig. 1:: eine perspektivische Ansicht einer Werkzeugmaschine;
- Fig. 2: eine perspektivische Ansicht eines Werkstücks in Form einer Felge;
- Fig. 3:: eine Draufsicht einer Haltevorrichtung zum Halten und Fixieren einer Felge;
- Fig. 4:: eine weitere Draufsicht der Haltevorrichtung gemäß Fig. 3 mit aufgenommener Felge;
- Fig. 5:: eine geschnittene Seitenansicht einer Ausführungsform einer Klemmbacke einer Auflageeinheit, auf der eine Felge aufliegt;
- Fig. 6:: eine weitere geschnittene Seitenansicht einer Ausführungsform einer Klemmbacke einer Auflageeinheit;
- Fig. 7:: eine Draufsicht auf eine Ausführungsform einer Klemmbacke zur Verwendung bei einer Auflageeinheit;
- Fig. 8:: einen Längsschnitt durch eine Ausführungsform einer Abstützeinheit;
- Fig. 9:: eine vereinfachte geschnittene Ansicht der Abstützeinheit gemäß Fig. 8 entlang der Linie VIII-VIII in Fig. 8;
- Fig. 10:: eine Teilansicht einer auf Fig. 8 basierenden Anordnung zur Veranschaulichung einer Abstandsmesseinheit;
- Fig. 11:: einen Längsschnitt durch eine weitere Ausführungsform einer Abstützeinheit; und
- Fig. 12:: eine Draufsicht auf eine Werkstückwechseleinrichtung mit zwei Haltevorrichtungen für die Bearbeitung von Felgen.

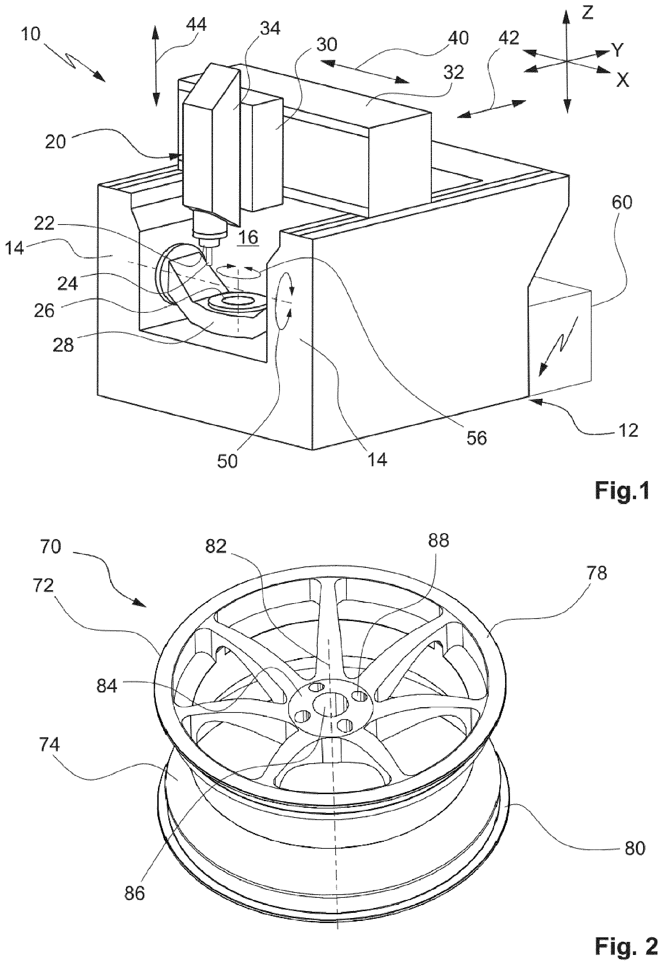

Fig. 1 veranschaulicht anhand einer perspektivischen Darstellung die Grundstruktur einer insgesamt mit 10 bezeichneten Werkzeugmaschine in Vertikalbauweise. In Fig. 1 ist die Werkzeugmaschine 10 als sogenannte Gantry-Maschine gestaltet. Dies ist nicht einschränkend zu verstehen. Es sind auch Gestaltungen in Portalbauweise (beispielsweise mit stehendem Portal), in Fahrständerbauweise, oder dergleichen vorstellbar.

In Fig. 1 ist aus Veranschaulichungsgründen ein kartesisches Koordinatensystem X-Y-Z dargestellt. Das Koordinatensystem dient zur Veranschaulichung grundlegender Orientierungen und Bewegungsachsen der Werkzeugmaschine 10 sowie von deren Komponenten. Eine mit X bezeichnete Achse kennzeichnet allgemein eine Längserstreckung. Eine mit Y bezeichnete Achse kennzeichnet allgemein eine Tiefenerstreckung. Im Ausführungsbeispiel definieren die Achsen X und Y gemeinsam eine Horizontalebene. Eine mit Z bezeichnete Achse kennzeichnet allgemein eine Höhenerstreckung. Das Koordinatensystem X-Y-Z dient in erster Linie zur Veranschaulichung und ist nicht in einschränkender Weise zu verstehen. Es versteht sich, dass auch andere Koordinatensysteme zur Beschreibung der Werkzeugmaschine 10 und deren Komponenten nutzbar sind. Der Fachmann kann entsprechende Transformationen vornehmen. Nachfolgend wird in weiteren der Figuren auf das Koordinatensystem X-Y-Z zurückgegriffen, um zumindest beispielhafte Orientierungen und Ausrichtungen zu veranschaulichen.

Im Ausführungsbeispiel gemäß Fig. 1 weist die Werkzeugmaschine 10 ein Gestell 12 auf, das auch als Basis oder Bett bezeichnet werden kann. Bei der gezeigten Gestaltung als Gantry-Maschine umfasst das Gestell 12 zwei seitliche Wangen 14, an deren Oberseite Führungen (Y-Führungen) ausgebildet sind. Die Werkzeugmaschine 10 definiert einen Arbeitsraum 16, in dem Werkstücke bearbeitet werden können, insbesondere durch spanabhebende Bearbeitung. Üblicherweise ist der Arbeitsraum 16 eingehaust (in Fig. 1 nicht gezeigt).

Die Werkzeugmaschine 10 umfasst eine Werkzeugspindel 20 mit einem Werkzeughalter 22, der zur Aufnahme eines Werkzeugs 24 ausgebildet ist. Im Ausführungsbeispiel ist die Werkzeugspindel 20 vertikal orientiert. Die Werkzeugspindel 20 ist in Fig. 1 als hängende Spindel gestaltet. Werkzeuge 24 können um eine vertikal orientierte Spindelachse angetrieben werden. Die Werkzeugspindel 20 ist relativ zu einem Werkstückhalter 26 beweglich, um ein dort angeordnetes Werkstück (in Fig. 1 nicht gezeigt) zu bearbeiten. Im Ausführungsbeispiel ist der Werkstückhalter 26 auf einer Schwenkbrücke 28 angeordnet, die beidseitig an den Wangen 14 des Gestells 12 gelagert ist. Andere Gestaltungen sind vorstellbar.

Die Werkzeugspindel 20 ist in drei linearen Achsen relativ zum Werkstückhalter 26 verfahrbar. Zu diesem Zweck sind im Ausführungsbeispiel ein X-Schlitten 30, ein Y-Schlitten 32 und ein Z-Schlitten 34 vorgesehen. Der Y-Schlitten 32 sitzt auf den Wangen 14 des Gestells 12. Der X-Schlitten 30 ist am Y-Schlitten 32 linear verfahrbar angeordnet. Der Z-Schlitten 34 ist am X-Schlitten 30 linear verfahrbar angeordnet. Der Z-Schlitten 34 trägt die Werkzeugspindel 20. Der X-Schlitten 30 trägt den Z-Schlitten 34. Der Y-Schlitten 32 trägt den X-Schlitten 30.

Der X-Schlitten 30 ist in einer X-Achse 40 (X-Richtung) entlang des Y-Schlittens 32 translatorisch verfahrbar. Der Y-Schlitten 32 ist in einer Y-Achse 42 (Y-Richtung) entlang der Wangen 14 des Gestells 12 translatorisch verfahrbar. Der Z-Schlitten 34 ist in einer Z-Achse 44 (Z-Richtung) entlang des X-Schlittens 30 verfahrbar. Der Z-Schlitten 34 ist vertikal verfahrbar. Der X-Schlitten 30 und der Y-Schlitten 32 sind horizontal verfahrbar. Im Ausführungsbeispiel stellen die Schwenkbrücke 28 (A-Achse 50, vergleiche Schwenkbewegungen um die X-Achse) und der Werkstückhalter 26 (C-Achse 56, vergleiche Schwenkbewegungen um die Z-Achse) weitere (rotatorische) Bewegungsachsen bereit. Insgesamt ist mit der Werkzeugmaschine 10 eine 5-Achs-Bearbeitung möglich. Andere Gestaltungen von Werkzeugmaschine 10 sind vorstellbar, beispielsweise mit einer 4-Achs-Kinematik, einer 3-Achs-Kinematik oder dergleichen.

Die Bewegung entlang der Achsen X, Y, Z kann durch die Spindel 22 oder den Werkstückhalter 26 erfolgen. Wesentlich ist, dass zwischen Spindel 22 und Werkstückhalter 26 eine Relativbewegung zustande kommt. Es sind auch Ausführungsformen vorstellbar, bei denen beispielsweise die Bewegung entlang der Y-Achse (Pfeil 42) durch ein Verfahren des Werkstückhalters 26 entlang des Gestells 12 realisiert wird.

In Fig. 1 ist ferner mit 60 eine Steuereinrichtung der Werkzeugmaschine 10 angedeutet. Die Steuereinrichtung 60 steuert beispielsweise anhand eines NC-Programms Komponenten der Werkzeugmaschine 10, um ein Werkstück in der gewünschten Weise zu bearbeiten.

Fig. 2 zeigt anhand einer perspektivischen Darstellung eine Felge 70, die als Werkstück zur Bearbeitung mit der Werkzeugmaschine 10 vorgesehen ist. Bei der Felge 70 handelt sich beispielhaft um eine Aluminiumfelge aus einer Aluminium-Legierung. Nach dem Urformen erfolgt üblicherweise eine Bearbeitung der Felge 70. Dies umfasst beispielhaft eine Drehbearbeitung mit einer Drehmaschine und eine damit verknüpfte Fräsbearbeitung oder Bohrbearbeitung mit der Werkzeugmaschine 10 gemäß Fig. 1 oder einer vergleichbaren Werkzeugmaschine.

Die Felge 70 umfasst einen Felgenkörper 72 mit einem Felgenbett 74, dass sich zwischen einem äußeren Felgenhorn 78 und einem inneren Felgenhorn 80 erstreckt. Eine Mittenachse der Felge 70 ist mit 82 bezeichnet. Ferner umfasst der Felgenkörper 72 ein Zentrum 84, in dem eine zentrische Nabenöffnung 86 und eine Mehrzahl von Bolzenlöchern 88 ausgebildet sind. Die Bearbeitung der Felge 70 in der Werkzeugmaschine 10 umfasst beispielsweise eine Bearbeitung der Bolzenlöcher 88. Auch eine Bearbeitung einer Ventilbohrung ist vorstellbar.

Die Bearbeitung der Felge 70 umfasst regelmäßig hohe Anforderungen an die Genauigkeit der Ausrichtung der bearbeiteten Abschnitte und Konturen in Bezug auf die Mittenachse 82.

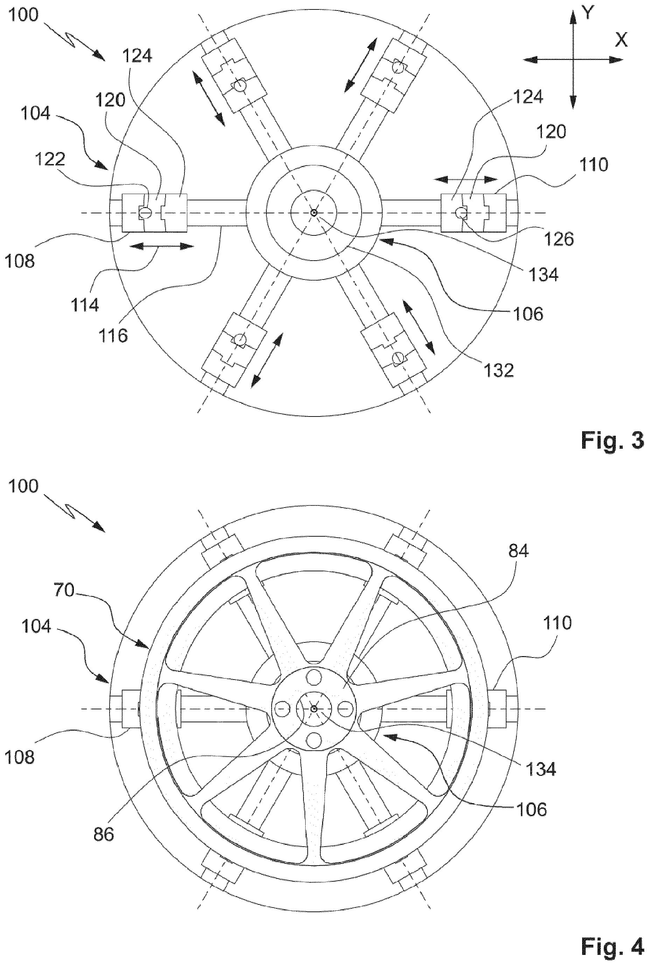

Mit Bezugnahme auf die Figuren 3-12 werden verschiedene Ausgestaltungen von Haltevorrichtungen 100 und deren Integration in Werkzeugmaschinen 10 veranschaulicht.

Die Figuren 3 und 4 veranschaulichen eine Draufsicht auf eine insgesamt mit 100 bezeichnete Haltevorrichtung. Die in Fig. 3 gezeigte Haltevorrichtung 100 ist noch nicht mit einer Felge bestückt. Die in Fig. 4 gezeigte Haltevorrichtung 100 ist mit einer Felge 70 bestückt.

Die Haltevorrichtung 100 weist eine Auflageeinheit 104 sowie eine Abstützeinheit 106 auf. Die Auflageeinheit 104 umfasst im Ausführungsbeispiel eine Mehrzahl von Klemmbacken 108, 110, die um ein durch die Abstützeinheit 106 gebildetes Zentrum der Haltevorrichtung 100 verteilt sind. In den Figuren 3 und 4 sind jeweils drei Klemmbacken 108 und drei Klemmbacken 110 dargestellt, die abwechselnd um das Zentrum verteilt sind.

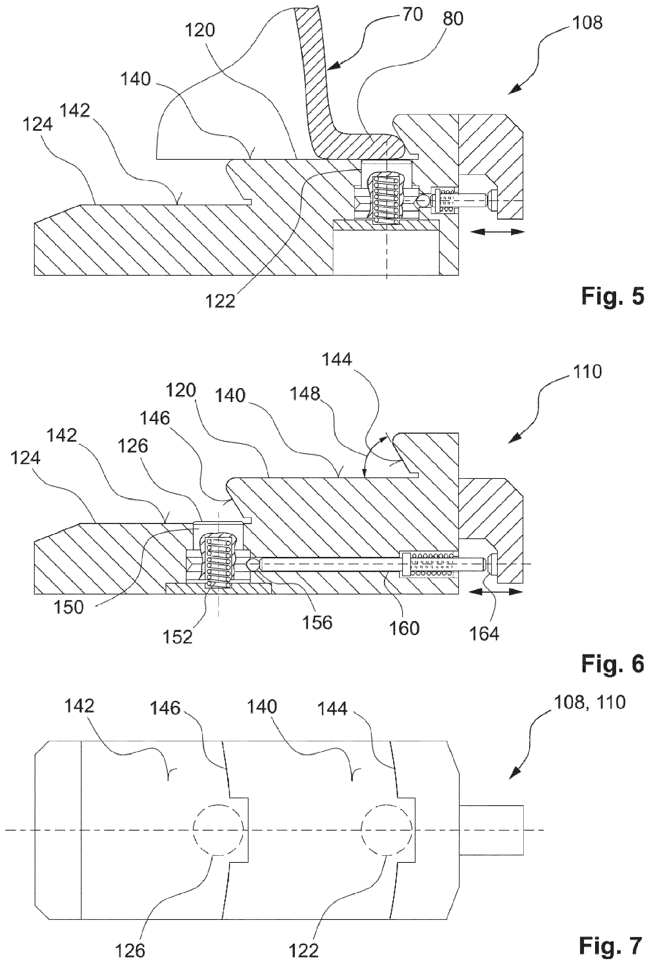

Die Klemmbacken 108, 110 bilden jeweils zumindest eine Auflagefläche 120, 124 auf, an der eine Felge 70 zur Bearbeitung aufliegen kann, vergleiche auch Fig. 4 bzw. Fig. 5. In die Auflagefläche 120 der Klemmbacken 108 ist ein Druckstück 122 integriert. In die Auflagefläche 124 der Klemmbacken 110 ist ein Druckstück 126 integriert. Im Ausführungsbeispiel unterscheiden sich also die Klemmbacken 108, 110 beispielhaft hinsichtlich der Anordnung der Druckstücke 120, 126 in einer der beiden Auflageflächen 120, 124.

Die Klemmbacken 108, 110 sind jeweils entlang einer Führung 116 radial in Bezug auf das Zentrum verfahrbar. Vergleiche hierzu auch den Pfeil 114. Auf diese Weise kann eine Felge 70 mit den Klemmbacken 108, 110, insbesondere am inneren Felgenhorn 80, durch die Auflageeinheit 104 geklemmt und fixiert werden. Vergleiche hierzu Fig. 2 und Fig. 4. In diesem Zustand ist eine Bearbeitung der Felge 70 ermöglicht.

Fig. 3 veranschaulicht ferner, dass die Abstützeinheit 132 einen Zentrierbasis 132 und ein Zentrierstück 134 umfasst. Bei montierter Felge 70 greift das Zentrierstück 134 in die Nabenöffnung 86 ein, vergleiche Fig. 4.

Die Figuren 5-7 veranschaulichen beispielhafte Ausgestaltungen der Klemmbacken 108 (Fig. 5) und 110 (Fig. 6). Die Klemmbacken 108, 110 weisen jeweils zwei relativ zueinander versetzte Auflageflächen 120, 124 auf, die zwei parallel zueinander entlang der Mittenachse 82 versetzte Auflageebenen 140, 142 definieren. Bei der Darstellung in Fig. 5 liegt eine nur teilweise gezeigte Felge 70 mit ihrem inneren Felgenhorn 80 auf der die Auflageebene 140 bildenden Auflagefläche 120 auf. Die Auflageflächen 120, 124 sind axial und radial relativ zueinander versetzt. Auf diese Weise eignen sich die Klemmbacken 108, 110 grundsätzlich für Felgen 70 unterschiedlicher Durchmesserbereiche und gegebenenfalls auch für Felgen 70 unterschiedlicher Breitenbereiche.

Die in Fig. 5 gezeigte Klemmbacke 108 weist in ihrer Auflagefläche 120 ein Druckstück 122 auf. Die in Fig. 6 gezeigte Klemmbacke 110 weist in ihrer Auflagefläche 124 ein Druckstück 126 auf. In Fig. 5 ist das Druckstück 122 durch das aufliegende Felgenhorn 80 der Felge 70 in eine bündige Position in Bezug auf die Auflagefläche 120 gebracht. Hingegen zeigt Fig. 6 eine erhabene Position des Druckstücks 126 in Bezug auf die Auflagefläche 124. Wenn dort eine Felge 70 aufgesetzt wird, wird das Druckstück 126 ebenso in eine bündige Position in Bezug auf die Auflagefläche 124 gedrängt.

Mithilfe der Druckstücke 122, 126 kann eine Spanerkennung bzw. Auflagenkontrolle realisiert werden. Wenn nämlich beispielhaft ein Span zwischen dem Felgenhorn 80 und der genutzten Auflagefläche 120, 124 verbleibt, kann das Druckstück 122, 126 nicht vollständig eingedrückt werden. In einem solchen Fall kann eine entsprechende Warnung bzw. einen sprechendes Fehlersignal ausgegeben werden. Die Abarbeitung des Bearbeitungsprogramms wird nicht freigegeben. Beispielsweise erfordert eine Auflagekontrolle über Druckstücke 122 die Abfrage dreier in Reihe geschalteter Druckstücke 122 über den Umfang, also beispielsweise über drei von sechs Klemmbacken 108, 110. Die Erfassung kann mittelbar über einen Druckluftsensor erfolgen.

Für die Auflageebene 140 ist neben der Auflagefläche 120 eine Klemmfläche 144 vorgesehen, die gemeinsam mit der Auflagefläche 120 einen Winkel 148 einschließt, vergleiche Fig. 6. Gleichermaßen ist für die Auflageebene 142 eine Klemmfläche 146 vorgesehen, die gemeinsam mit der Auflagefläche 124 einen entsprechenden Winkel einschließt. Der Winkel 148 zwischen der Klemmfläche 144, 146 und der Auflagefläche 120, 124 beträgt weniger als 90°, beispielsweise 60° bis 75°. Mit der Klemmfläche 144, 146 können die Klemmbacken 108, 110 radial und axial an das Felgenhorn 80 angreifen, vergleiche hierzu Fig. 5. Auf diese Weise kann eine Felge 70 radial und axial an der Auflageeinheit 104 der Haltevorrichtung 100 fixiert und gesichert werden.

Mit Bezugnahme auf Fig. 6 wird eine beispielhafte Detailgestaltung des Druckstücks 126 näher veranschaulicht. Das Druckstück 122 gemäß Fig. 5 ist zumindest im dortigen Ausführungsbeispiel sehr ähnlich gestaltet.

Das Druckstück 126 umfasst im Ausführungsbeispiel gemäß Fig. 6 einen Druckteller 150, der durch ein Vorspannelement 152 in eine erhabene Position gedrängt wird. Beim Aufliegen der Felge 70 wird der Druckteller 150 in eine bündige Position in Bezug auf die Auflagefläche 124 gedrängt. In einem solchen Fall wird durch eine Umlenkung 156 ein Schieber 160 in Richtung auf einen Schalter 164 verfahren, um den Schalter 164 zu betätigen. Dies kann als Indikator dafür genutzt werden, dass die Felge 70 mit ihrem Felgenhorn 80 bündig auf der jeweiligen Auflagefläche 124 der Auflageebene 142 aufliegt. In ähnlicher Weise kann eine bündige Auflage auf der Auflagefläche 120 der Auflageebene 140 über das Druckstück 122 ermittelt werden, vergleiche Fig. 5. In einer beispielhaften Ausgestaltung umfasst der Schalter 164 eine Luftdüse, über die ein Luftstrom austritt, wobei sich der Luftstrom in Abhängigkeit von der Auflage der Felge 70 verändert. Beispielsweise kann der Luftstrom bei korrekter Auflage der Felge 70 über den Schieber 160 blockiert werden.

Fig. 7 veranschaulicht anhand einer schematischen Darstellung, dass die Klemmbacken 108, 110 grundsätzlich einander sehr ähnlich gestaltet sein können. Im Ausführungsbeispiel ist ein Unterschied hinsichtlich der Anordnung der Druckstücke 122, 126 gegeben. Bei der Gestaltung der Auflageeinheit 104 gemäß Fig. 3 mit jeweils drei Klemmbacken 108 und drei Klemmbacken 110 können in jeder der beiden Ebenen 140, 142 insgesamt sechs Klemmbacken 108, 110 für die Auflage genutzt werden, wobei die Klemmbacken 108 eine Auflageerkennung in der Auflageebene 140 und die Klemmbacken 110 eine Auflageerkennung in der Auflageebene 142 erlauben.

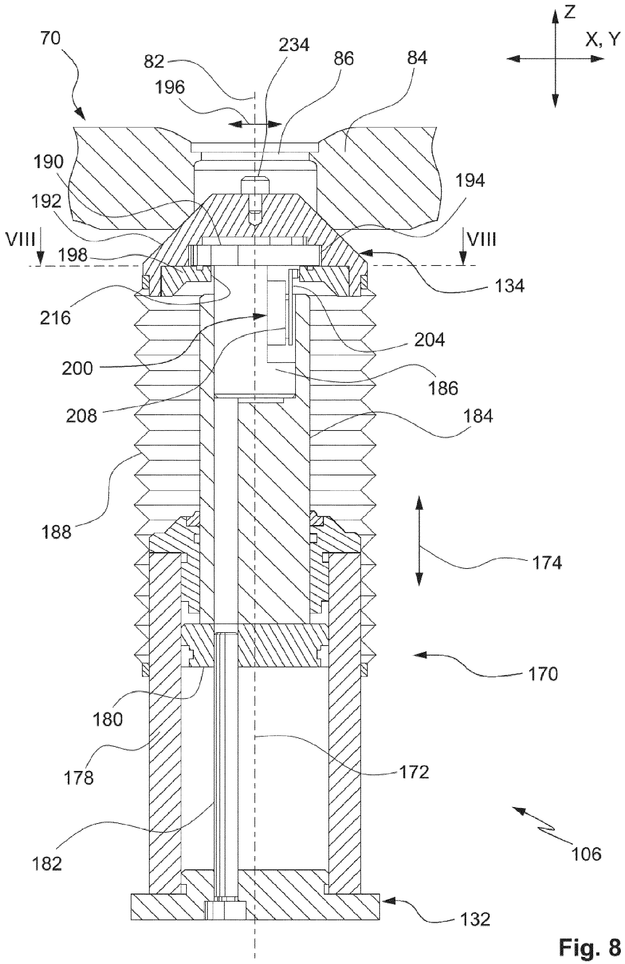

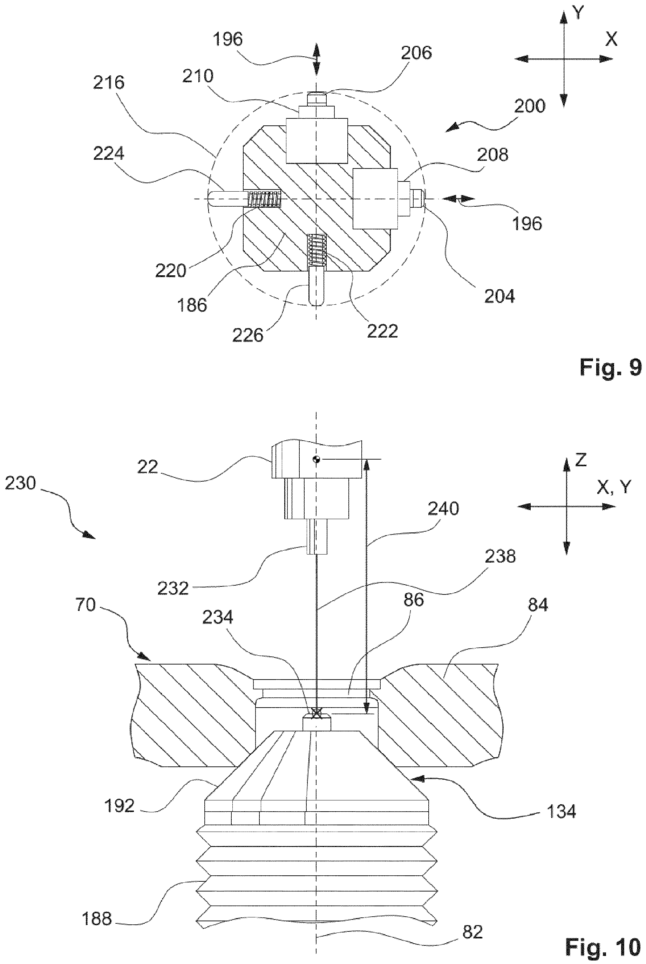

Mit Bezugnahme auf die Figuren 8 und 9 wird eine beispielhafte Ausgestaltung der Abstützeinheit 106 näher veranschaulicht. Die Abstützeinheit 106 ist in einem Zentrum der Haltevorrichtung 100 angeordnet, vergleiche hierzu auch Fig. 3. Die Abstützeinheit 106 umfasst eine Zentrierbasis 132 und ein relativ zur Zentrierbasis 132 bewegliches Zentrierstück 134. Das Zentrierstück 134 ist dazu ausgebildet, in eine Nabenöffnung 86 einer Felge 70 einzugreifen und die Felge 70 abzustützen.

Die Abstützeinheit 106 umfasst eine Längsführung 170, die eine Längsbewegung 174 des Zentrierstücks 134 in Bezug auf die Zentrierbasis 132 entlang einer Zentrierachse 172 ermöglicht. Auf diese Weise kann das Zentrierstück 134 aus einer versenkten Stellung in Richtung auf die Nabenöffnung 86 der Felge 70 verfahren werden. Auf diese Weise kann das Zentrierstück 134 die Nabenöffnung 86 zentrisch kontaktieren. Bei der Aufnahme und Befestigung der Felge 70 an der Haltevorrichtung 100 muss damit gerechnet werden, dass es zumindest einen geringen Versatz zwischen einer Mitte der Felge 70 (bzw. der Mittenachse 82) und der Zentrierachse 172 gibt. Die Abstützeinheit 106 ist nicht dazu ausgebildet, diesen Versatz mechanisch zu korrigieren. Stattdessen ist die Abstützeinheit 106 dazu ausgebildet, den Versatz zwischen der Mittenachse 82 und der Zentrierachse 172 zu erfassen, damit er bei der Bearbeitung der Felge 70 durch die Steuereinheit 60 der Werkzeugmaschine 10 (vergleiche Fig. 1) berücksichtigt und kompensiert werden kann.

Im Ausführungsbeispiel gemäß Fig. 8 umfasst die Abstützeinheit 106 eine Längsführung 170 mit einen Zylinder 178, in dem ein Kolben 180 translatorisch verfahrbar angeordnet ist. Der Zylinder 178 ist mit der Zentrierbasis 132 gekoppelt. Der Kolben 180 ist mit dem Zentrierstück 134 gekoppelt. Im Ausführungsbeispiel ist ferner ein Bolzen 182 vorgesehen, der sich zwischen der Zentrierbasis 132 und dem Kolben 180 erstreckt, und der parallel sowie beabstandet zur Zentrierachse 172 angeordnet ist. Mit anderen Worten bewirkt der Bolzen 182 eine Verdrehsicherung zwischen der Zentrierbasis 132 und dem Kolben 180.

Der Kolben 180 trägt ein Schubstück 184, das wiederum zur Aufnahme eines Trägers 186 dient, der einen Sitz 190 ausbildet, an dem das Zentrierstück 134 aufgenommen ist. Der Kolben 180 kann durch einen geeigneten Antrieb oder ein geeignetes Vorspannelement ausgehend von der Zentrierbasis 182 in Richtung auf die Nabenöffnung 86 einer Felge 70 bewegt werden, die an der Auflageeinheit 104 aufliegt. Am Zentrierstück 134 ist ein Konus 192 ausgebildet, der in die Nabenöffnung 86 eindringt.

Das Zentrierstück 134 ist relativ zum Sitz 190 quer zur Mittenachse 82 bzw. zur Zentrierachse 172 verschieblich. Vergleiche hierzu einen Doppelpfeil 196, der eine entsprechende Abweichung veranschaulicht. Der Doppelpfeil 196 veranschaulicht auch eine Ebene (Ebene parallel zur X-Richtung und zur Y-Richtung), in der das Zentrierstück 134 entlang des Sitzes 190 relativ zur Auflageebene 140, 142 beweglich ist. In dieser Ebene ist das Zentrierstück 134 schwimmend bzw. spielbehaftet auf dem Sitz 190 gelagert. Zwischen dem Zentrierstück 134 und dem Zylinder 178 erstreckt sich beispielsweise eine Abdeckung 188 in Form eines Faltenbalgs. Dies verbessert den Schutz der Komponenten der Abstützeinheit 106.

Das Zentrierstück 134 umgreift den im Ausführungsbeispiel etwa scheibenartig gestalteten Sitz 190. Das Zentrierstück 134 kann also nicht vom Sitz 190 abheben. Vergleiche hierzu im Ausführungsbeispiel gemäß Fig. 8 einen dem Zentrierstück 134 zugeordneten Ring 198, der für einen formschlüssigen Sitz des Zentrierstücks 134 am Sitz 190 sorgt und Längsbewegungen (vergleiche den Pfeil 174) zwischen dem Kolben 180 (bzw. dem Sitz 190) und dem Zentrierstück 134 unterbindet.

Zwischen dem Zentrierstück 134 und dem Sitz 190 erstreckt sich ein Umfangsspalt 194. Der Umfangspalt 194 definiert dem möglichen Bereich für eine Querverschiebung des Zentrierstücks 134 in Bezug auf die Zentrierbasis 132.

Zur Erfassung der Querverschiebung (Versatzbewegung) des Zentrierstücks 134 in Bezug auf die Zentrierbasis 132 und damit zur Erfassung eines Versatzes zwischen der Mittenachse 82 der Felge 70 und der Zentrierachse 182 dient eine Messeinrichtung 200, die zumindest teilweise in die Abstützeinheit 106 integriert ist. Die beispielhafte Gestaltung der Messeinrichtung 200 wird mit Bezugnahme auf die Figuren 8 und 9 veranschaulicht. Fig. 9 zeigt eine teilweise schematisch vereinfachte Schnittansicht entlang der Linien VIII-VIII in Fig. 8.

Die Messeinrichtung 200 umfasst im Ausführungsbeispiel einen ersten Messtaster 204, der an einer Basis 208 gelagert ist, und einen zweiten Messtaster 206, der an einer Basis 210 gelagert ist. In Fig. 8 ist lediglich der Messtaster 204 mit der Basis 208 sichtbar. Die Messtaster 204, 206 mit der jeweiligen Basis 208, 210 sind am Träger 186 aufgenommen und damit in Bezug auf den Sitz 190 festgelegt. Wenn nun das Zentrierstück 134 relativ zum Sitz 190 verschoben wird, vergleiche die Doppelpfeile 196 in Fig. 8 und Fig. 9, umfasst dies auch eine Bewegung der Innenfläche 216 relativ zum Träger 186. Durch diese Bewegung werden die Messtaster 204, 206 ausgelenkt. Diese Auslenkung kann durch die Messeinrichtung 200 erfasst werden. Auf diese Weise kann ein Versatz zwischen der Mitte der Felge 70 und der Zentrierachse 172 ermittelt werden.

Die in Fig. 9 gezeigte beispielhafte Darstellung umfasst ferner ein dem Messtaster 204 in Bezug auf die Zentrierachse 172 gegenüberliegendes Kontaktstück 224, das durch eine Kontaktfeder 220 in einem definierten Kontakt mit der Innenfläche 216 gebracht wird. Ferner ist ein dem Messtaster 206 in Bezug auf die Zentrierachse 172 gegenüberliegendes Kontaktstück 226 gezeigt, das durch eine Kontaktfeder 222 in einem definierten Kontakt mit der Innenfläche 216 gebracht wird. Auf diese Weise wird Spielarmut oder Spielfreiheit bei der Messeinrichtung 200 gewährleistet. Die Messtaster 204, 206 können jeweils in zwei Richtungen (entlang einer Achse) messen, also ausgehend von einem Nullpunkt positive und negative Werte ausgeben.

Mit Bezugnahme auf die Figuren 8 und 10 wird ferner eine Abstandsmesseinheit 230 veranschaulicht, die eine Reflektorfläche 234 nutzt, die stirnseitig beim Zentrierstück 134 angeordnet ist. Die Abstandsmesseinheit 230 kann (funktionaler) Bestandteil der Messeinrichtung 200 oder separat und grundsätzlich unabhängig davon vorgesehen sein.

Im Ausführungsbeispiel gemäß Fig. 10 umfasst die Abstandsmesseinheit 230 eine Sender-Empfängereinheit 232, die dazu ausgebildet ist, einen Laserstrahl 238 auszusenden und nach Reflektion an der Reflektorfläche 234 wieder zu empfangen. Mit anderen Worten ist die Abstandsmesseinheit 230 beispielhaft als Laserinterferometer und/oder Laserentfernungsmesser gestaltet. Im Ausführungsbeispiel kann die Sender-Empfängereinheit 232 bedarfsweise statt eines Werkzeugs 24 am Werkzeughalter 22 der Werkzeugmaschine 10 (vergleiche Fig. 1) aufgenommen werden.

Die Abstandsmesseinheit 230 erlaubt eine Bestimmung einer Axialposition der Felge 70 entlang der Mittenachse 82. Bei Nutzung einer optischen oder optoelektrischen Abstandsmesseinheit 230 kann die Messung berührungslos erfolgen.

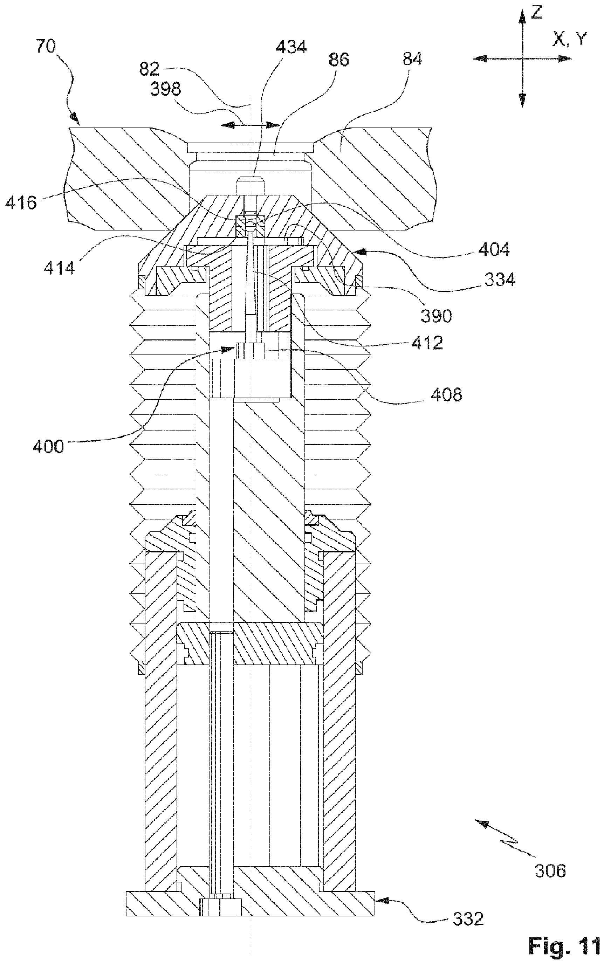

Mit Bezugnahme auf Fig. 11 wird eine weitere beispielhafte Ausgestaltung einer Abstützeinheit 306 veranschaulicht, die der Abstützeinheit 106 gemäß Fig. 8 zumindest ähnlich gestaltet ist. In erster Linie unterscheidet sich die Abstützeinheit 306 von der Gestaltung der Abstützeinheit 106 durch die Gestaltung der Messeinrichtung 400. Daher wird nachfolgend in erster Linie auf Unterscheidungsmerkmale hinsichtlich der Messeinrichtung 400 eingegangen. Hinsichtlich der übrigen Gestaltung der Abstützeinheit 306 wird auf die diesbezüglichen Erläuterungen in Zusammenhang mit der Abstützeinheit 106 verwiesen.

Die Abstützeinheit 306 umfasst eine Zentrierbasis 332 und ein relativ zur Zentrierbasis 332 bewegliches Zentrierstück 334, das auf einem Sitz 390 querverschieblich gelagert ist, vergleiche den Doppelpfeil 398, der eine mögliche Abweichung beschreibt. Auf diese Weise lässt sich wie zuvor bereits erläutert ein Querversatz der Mittenachse 82 einer zu bearbeitenden Felge 70 ermitteln. Zu diesem Zweck greift das Zentrierstück 334 in die Nabenöffnung 86 der Felge 70 ein.

Die Messeinrichtung 400 dient zur Erfassung des Querversatzes der Felge 70. Die Messeinrichtung 400 weist einen (einzigen) Messtaster 404 auf, der über eine stabförmige Sonde 412 an einer Basis 408 aufgenommen ist. Die stabförmige Sonde 412 weist ein großes Längen-Durchmesser-Verhältnis auf. Der Messtaster 404 ist beispielhaft als Messkugel gestaltet und in einem Lagerstück 414 angeordnet und dort in Kontakt mit einer Innenfläche 416 des Lagerstücks 414. Das Lagerstück 414 ist fest mit dem Zentrierstück 334 gekoppelt. Auf diese Weise werden etwaige Bewegungen (Doppelpfeil 398) des Zentrierstücks 334 relativ zum Sitz 390 auf den Messtaster 404 übertragen, wodurch sich die stabförmige Sonde 412 entsprechend auslenkt. Auch auf diese Weise können Auslenkungen des Zentrierstücks 334 in zwei Richtungen quer zur Mittenachse 82 erfasst werden.

Der Messtaster 404 und die stabförmige Sonde 412 sind durch die umgebenden Komponenten der Abstützeinheit 306 sehr gut gegenüber der Umgebung geschützt. Trotzdem kann die Mitte der Felge 70 (mittelbar) hochgenau erfasst werden.

Analog zur Gestaltung der Abstützeinheit 106 gemäß den Figuren 8 und 10 weist auch die Abstützeinheit 306 beim Zentrierstück 334 eine Reflektorfläche 434 auf, die zur optischen Antastung zu Zwecken der Abstandsmessung geeignet ist.

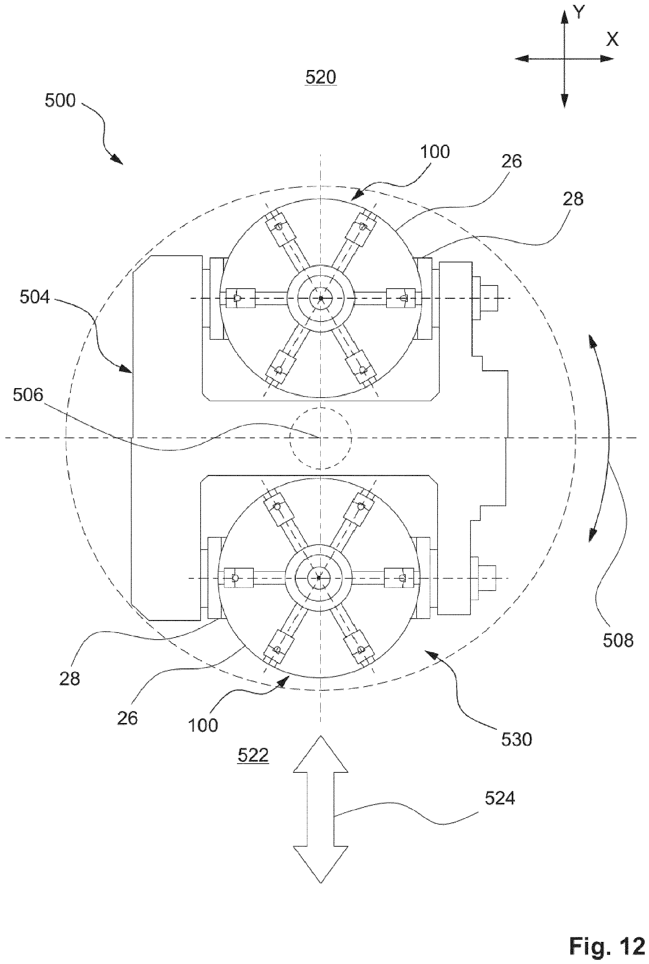

Mit Bezugnahme auf Fig. 12 sowie mit ergänzender Bezugnahme auf die schematische Ansicht einer Werkzeugmaschine gemäß Fig. 1 wird eine insgesamt mit 500 bezeichnete Werkstückwechseleinrichtung veranschaulicht. Die Werkzeugmaschine 10 gemäß Fig. 1 kann um die Werkstückwechseleinrichtung 500 ergänzt werden. Die Werkstückwechseleinrichtung 500 weist einen um eine Drehachse 506 drehbaren Drehtisch 504 auf, vergleiche einen gekrümmten Doppelpfeil 508, der die Drehbewegung veranschaulicht. Auf diese Weise kann der Drehtisch 504 der Werkstückwechseleinrichtung 500 um 180° gedreht werden.

Der Drehtisch 504 ist im Ausführungsbeispiel gemäß Fig. 12 als Doppeltisch gestaltet. Der Drehtisch 504 weist einen ersten Werkstückhalter 26 mit einer ersten Haltevorrichtung 100 und gegenüberliegend einen zweiten Werkstückhalter 26 mit einer zweiten Haltevorrichtung 100 auf. Bedarfsweise ist für jeden der beiden Werkstückhalter 26 eine Schwenkbrücke 28 vorgesehen, die eine sogenannte A-Achse bereitstellt, vergleiche auch Fig. 1. Dies vereinfacht beispielsweise die Bearbeitung von Ventilbohrungen.

Die Haltevorrichtungen 100 sind beispielhaft jeweils gemäß zumindest einer der hierin beschriebenen Ausführungsformen gestaltet und zur Aufnahme und Fixierung einer Felge 70 ausgebildet. Die beiden Haltevorrichtungen 100 sind um 180° in Bezug auf die Drehachse 506 relativ zueinander versetzt.

Der Drehtisch 504 erlaubt nun durch eine Drehung um 180° einen Wechsel zwischen einer Bearbeitungsposition 520 und einer Wechselposition 522. In der Bearbeitungsposition 520 befindet sich die jeweilige Haltevorrichtung 100 im Arbeitsraum (Bezugszeichen 16 in Fig. 1) der Werkzeugmaschine 10. In der Wechselposition 522 befindet sich die jeweilige Haltevorrichtung 100 außerhalb des Arbeitsraums 16, so dass ein Be- und Entladen ermöglicht ist, vergleiche den mit 524 bezeichneten Blockpfeil in Fig. 12.

Sofern die Haltevorrichtungen 100 mit einer Abstützeinheit 106, 306 mit einer integrierten Messeinrichtung 200, 400 zu Erfassung der Mitte der Felge 70 vorgesehen sind, kann diese Erfassung bereits beim Beladen der Haltevorrichtung 100 in der Wechselposition 522 erfolgen. Bei der Wechselposition 522 kann eine Ladestation 530 angeordnet/ausgebildet sein.

## Patentansprüche

1. Haltevorrichtung (100) zum Halten und Fixieren einer Felge (70) während einer Bearbeitung in einer Werkzeugmaschine (10), wobei die Haltevorrichtung (100) Folgendes aufweist:
- eine Auflageeinheit (104) zur Aufnahme eines Felgenhorns (80) einer Felge (70), die eine Mittenachse (82) aufweist,
wobei die Auflageeinheit (104) zumindest eine verfahrbare Klemmbacke (108, 110) aufweist, die dazu ausgebildet ist, von außen an das Felgenhorn (80) anzugreifen, um die Felge (70) an der Haltevorrichtung (100) zu sichern, und
wobei die Auflageeinheit (104) eine Auflageebene (140, 142) für das Felgenhorn (80) definiert,
- eine Abstützeinheit (106, 306) mit einer Zentrierbasis (132, 332) und einem relativ zur Zentrierbasis (132, 332) beweglichen Zentrierstück (134, 334), das dazu ausgebildet ist, an eine Nabenöffnung (86) der Felge (70), insbesondere in koaxialer Orientierung zu einer Mittenachse (82) der Felge (70), anzugreifen, und
- eine Messeinrichtung (200, 400) mit zumindest einem Messtaster (204, 206, 404), **dadurch gekennzeichnet, dass**
das Zentrierstück (134, 334) in zumindest einer Richtung seitlich zur Mittenachse (82) gegenüber der Zentrierbasis (132, 332) beweglich ist, und
der zumindest eine Messtaster (204, 206, 404) in die Abstützeinheit (106, 306) integriert ist, um anhand der seitlichen Bewegung des Zentrierstücks (134, 334) eine Position der Mittenachse (82) zu bestimmen.

2. Haltevorrichtung (100) nach Anspruch 1, **dadurch gekennzeichnet,**
**dass** die Messeinrichtung (200, 400) einen ersten Messtaster (204) und einen zweiten Messtaster (206) aufweist, die schräg zueinander, insbesondere quer zueinander, orientiert sind, um eine Position der Mittenachse (82) in zwei Richtungen zu bestimmen, die parallel zur Auflageebene (140, 142) orientiert sind, und/oder dass der zumindest eine Messtaster (204, 206, 404) ausgelenkt ist, wenn das Zentrierstück (134, 334) relativ zu der Zentrierbasis (132, 332) gegenüber einer konzentrischen Soll-Orientierung seitlich versetzt ist.

3. Haltevorrichtung (100) nach Anspruch 1 oder 2, **dadurch gekennzeichnet,**
**dass** dem zumindest einen Messtaster (204, 206, 404) eine Kontaktfeder (220, 222) zugeordnet ist, die dem Messtaster (204, 206, 404) bezüglich der Mittenachse (82) gegenüberliegt, und/oder
**dass** der zumindest eine Messtaster (204, 206, 404) innerhalb der Abstützeinheit (106, 306) umschlossen und vor einem Kühlschmiermitteleintrag geschützt ist.

4. Haltevorrichtung (100) nach einem der Ansprüche 1-3, **dadurch gekennzeichnet, dass** die Messeinrichtung (200, 400) eine stabförmige Sonde (412) aufweist, die den zumindest einen Messtaster (404) trägt, wobei die stabförmige Sonde (412) in einer ersten Richtung und einer zweiten Richtung schwenkbar ist, um Auslenkungen in zwei Achsen zu erlauben, und/oder
dass die Haltevorrichtung (100) eine Reflektorfläche (234, 434) an einer von der Zentrierbasis (132, 332) abgewandten Seite des Zentrierstücks (134, 334) aufweist, die zur Erfassung einer Axialposition der Felge (70) optisch antastbar ist.

5. Haltevorrichtung (100) nach einem der Ansprüche 1-4, **dadurch gekennzeichnet, dass** die Abstützeinheit (106, 306) eine Längsführung (170) zwischen der Zentrierbasis (132, 332) und dem Zentrierstück (134, 334) aufweist, die eine Längsbewegung (174) des Zentrierstücks (134, 334) parallel zur Mittenachse (82) erlaubt.

6. Haltevorrichtung (100) nach Anspruch 5, **dadurch gekennzeichnet,**
**dass** die Längsführung (170) einen Zylinder (178) und einen im Zylinder (178) verfahrbaren Kolben (180) aufweist, der ein Schubstück (184) trägt, das an seinem vom Zylinder (178) abgewandten Ende das Zentrierstück (134, 334) verschieblich aufnimmt, und vorzugsweise
**dass** sich zwischen dem zwischen dem Zentrierstück (134, 334) und dem Zylinder (178) eine Abdeckung (188) erstreckt, insbesondere in Form eines Faltenbalgs.

7. Haltevorrichtung (100) nach einem der Ansprüche 1-6, **dadurch gekennzeichnet, dass** die Zentrierbasis (132, 332) an ihrem der Nabenöffnung (86) zugewandten Ende einen Sitz (190, 390) für das Zentrierstück (134, 334) trägt,
dass das Zentrierstück (134, 334) relativ zum Sitz (190, 390) in einer zur Auflageebene (140, 142) parallelen Ebene verschieblich ist, und vorzugsweise
dass der zumindest eine auslenkbare Messtaster (204, 206, 404) am Sitz (190, 390) festgelegt ist, um Bewegungen des Zentrierstücks (134, 334) relativ zum Sitz (190, 390) zu erfassen.

8. Haltevorrichtung (100) nach Anspruch 7, **dadurch gekennzeichnet,**
**dass** das Zentrierstück (134, 334) am Sitz (190, 390) verschieblich aufgenommen ist, und dass das Zentrierstück (134, 334) den Sitz (190, 390) umgreift, und/oder
**dass** der Sitz (190, 390) scheibenartig gestaltet ist, und dass das Zentrierstück (134, 334) einen Ring (198) aufweist, der einen formschlüssigen Sitz des Zentrierstücks (134, 334) am Sitz (190, 390) bereitstellt und das Zentrierstück (134, 334) gegen ein Abheben vom Sitz (190, 390) sichert.

9. Haltevorrichtung (100) nach Anspruch 7 oder 8, **dadurch gekennzeichnet, dass** sich zwischen dem Zentrierstück (134, 334) und dem Sitz (190, 390) ein Umfangsspalt (194) erstreckt, der einen möglichen Bereich für eine Querverschiebung des Zentrierstücks (134, 334) in Bezug auf die Zentrierbasis (132, 332) definiert.

10. Haltevorrichtung (100) nach einem der Ansprüche 1-9, **dadurch gekennzeichnet, dass** am Zentrierstück (134, 334) eine Innenfläche (216, 416) ausgebildet ist, insbesondere eine zylindrische Innenfläche (216, 416), an der der zumindest eine Messtaster (204, 206, 404) anliegt, und vorzugsweise
dass auch zumindest eine dem zumindest einen Messtaster (204, 206, 404) gegenüberliegende Kontaktfeder (220, 222) an der Innenfläche (216, 416) anliegt.

11. Haltevorrichtung (100) nach einem der Ansprüche 1-10, **dadurch gekennzeichnet, dass** die Auflageeinheit (104) eine Mehrzahl von Klemmbacken (108, 110) aufweist, die jeweils eine Auflagefläche (120, 124) für das Felgenhorn (80) bereitstellen, und/oder
dass die zumindest eine verfahrbare Klemmbacke (108, 110) zumindest eine einen Rand des Felgenhorns (80) übergreifende Klemmfläche (144, 146) aufweist, die gemeinsam mit der Auflagefläche (120, 124) einen Winkel (148) einschließt, der kleiner als 90° ist.

12. Haltevorrichtung (100) nach einem der Ansprüche 1-11, **dadurch gekennzeichnet, dass** die zumindest eine verfahrbare Klemmbacke (108, 110) zumindest zwei insbesondere parallel zueinander versetzte Auflageflächen (120, 124) aufweist, so dass die Auflageeinheit (104) insgesamt zumindest zwei Auflageebenen (140, 142) für Felgen (70) mit unterschiedlichem Durchmesser bereitstellt.

13. Haltevorrichtung (100) nach einem der Ansprüche 1-12, **dadurch gekennzeichnet, dass** die zumindest eine verfahrbare Klemmbacke (108, 110) eine Auflagefläche (120, 124) für das Felgenhorn (80) aufweist,
dass in der Auflagefläche (120, 124) ein Druckstück (122, 126) angeordnet ist, das gegen die Kraft eines Vorspannelements (152) zwischen einer erhabenen Position und einer bündig eingefahrenen Position beweglich ist,
dass sich das Druckstück (122, 126) im Falle einer bündigen Auflage des Felgenhorns (80) auf der Auflagefläche (120, 124) in der bündig eingefahrenen Position befindet, und insbesondere
dass das Druckstück (122, 126) einen Druckteller (150) aufweist, der durch ein Vorspannelement (152) in eine erhabene Position gedrängt wird, wobei der Druckteller (150) über eine Umlenkung (156) mit einem Schieber (160) gekoppelt ist, der in Richtung auf einen Schalter (164) verfahrbar ist, um den Schalter (164) zu betätigen.

14. Werkzeugmaschine (10) zur spanenden Bearbeitung von Felgen (70), die Folgendes aufweist:
- eine Werkzeugspindel (20) mit einem Werkzeughalter (22) zur Aufnahme eines Werkzeugs (24) zur spanenden Bearbeitung, und
- einen Werkstückhalter (26) mit einer Haltevorrichtung (100) nach einem der Ansprüche 1-13,
wobei der Werkzeughalter (22) und der Werkstückhalter (26) in zumindest zwei translatorischen Achsen, die orthogonal zueinander orientiert sind, relativ zueinander verfahrbar sind, um eine mit der Haltevorrichtung (100) fixierte Felge (70) mit dem Werkzeug (24) spanend zu bearbeiten.

15. Werkzeugmaschine (10) nach Anspruch 14, ferner aufweisend
- eine Abstandsmesseinheit (230), insbesondere eine Abstandsmesseinheit (230) mit einer Sender-Empfängereinheit (232) für Laserlicht, die bedarfsweise in den Werkzeughalter (22) einwechselbar oder in einer Ladestation (530) der Werkzeugmaschine (10) angeordnet ist, um eine Axialposition der Felge (70) entlang der Mittenachse (82) zu erfassen, und/oder
- eine Steuereinrichtung (60), die dazu ausgebildet ist, anhand von Positionsdaten, die die Messeinrichtung (200, 400) übermittelt, einen Versatz zwischen einem Maschinenkoordinatensystem (X, Y, Z) und einer gegebenen Position und Orientierung der Felge (70) zu bestimmen und bei der Bearbeitung zu berücksichtigen, und/oder
- eine Werkstückwechseleinrichtung (500) mit einem Drehtisch (504), der einen ersten Werkstückhalter (26) und einen gegenüberliegenden zweiten Werkstückhalter (26) trägt, wobei der zweite Werkstückhalter (26) in einer Wechselposition (522) ist, wenn der erste Werkstückhalter (26) in einer Bearbeitungsposition (520) ist, und wobei der erste Werkstückhalter (26) in einer Wechselposition (522) ist, wenn der zweite Werkstückhalter (26) in einer Bearbeitungsposition (520) ist.
